# EUROPEAN PATENT APPLICATION

(11) **EP 4 851 837 A1**
(43) Date of publication of application: **09.12.2026**
(21) Application number: 25181497.6
(22) Date of filing: 06.06.2025
(51) Int. Cl.: G06F 21/53, G06F 21/57, H04L 9/40

(54) **METHODS FOR SECURE DATA COMMUNICATION WITH A MOBILE DEVICE**

(71) Applicant: Nagravision Sàrl, 1033 Cheseaux-sur-Lausanne (CH)
(72) Inventor: PRICE, David Owen Escott, 1033 Cheseaux-sur-Lausanne (CH)
(74) Representative: Meissner Bolte Partnerschaft mbB

(57) **Abstract**

The present invention relates to a computer-implemented method for secure data communication with a mobile device, the mobile device comprising a hardware-based trusted execution environment, as well as corresponding computer-readable media. According to one aspect, the method comprises the following steps:
- receiving, from a client application, a request for receiving data on the mobile device;
- establishing a secure communication channel between a protection server and a security software kit on the mobile device, in response to the request;
- receiving, from the protection server, one or more encrypted data parts related to the request; and
- instructing an operating system of the mobile device to decrypt the one or more encrypted data parts via a decryption module of the trusted execution environment, to obtain one or more plain data parts corresponding to the one or more encrypted data parts.

## Description

The present invention relates to methods for secure data communication with a mobile device and to corresponding computer-readable media.

The use of applications (apps) for mobile devices, such as smartphones, tablets, laptops, computers, vehicle infotainment systems, etc. has become indispensable in many areas of life. Many of these applications receive personal identifying data or other sensitive data from web servers, to display the data on the mobile device. For example, banking apps may display the name of the account holder together with an account balance, medical apps may display data indicative of a current health state and pre-existing diseases, and password management apps may display credentials of user accounts for websites. Data to be protected may not only be received from a web server, but may also be received from the user directly, for example, when the user inputs a password for a website login via a screen keyboard of the mobile device.

In the following, the term "sensitive data" is used to refer to any data to be protected, regardless of the type and origin of the data.

It is thus necessary to protect sensitive data processed on the mobile device against unauthorized access by third parties. In particular, such third parties may be further software applications, which are different from the client application that processes the sensitive data but run on the same mobile device as the client application.

Generally, for protecting sensitive data against unauthorized access, different approaches addressing different technical aspects and attack scenarios exist.

Most of the current applications rely on establishing a secured connection (e.g., based on the HTTPS/TLS protocol) to transfer the data between the mobile device and a web server. However, once the data is decrypted on the mobile device after receiving the data, without further protection mechanisms, the data can be processed without further constraints. This means that also unauthorized third-party applications may access the data stored on the mobile device.

In this context, it is further known to provide mobile devices with hardware-based Trusted Execution Environments (TEEs). A hardware-based TEE provides a hardware-based isolation from the rich operating system of the mobile device, such as Android or iOS. A TEE runs on the main hardware platform of the mobile device and relies on hardware roots of trust (such as cryptographic keys and secure boot). This way, a TEE can provide a computing environment for running trusted applications, wherein the computing environment is hardware-isolated from the operating environment of the mobile device (rich environment), including third-party applications. For this purpose, a TEE has privileged access to the mobile device's resources, in particular, its CPU, memory and peripherals, and can block third-party applications from accessing these resources when running a trusted application.

The use of TEEs has become popular within the context of Digital Rights Management (DRM). By using DRM systems, content providers can restrict the use of digital data provided to a mobile device, such as high-definition video or audio data. DRM systems are based on uniquely binding digital contents to a license through cryptographic methods and providing the content to the users in encrypted form, such that only users with a valid license can decrypt and access the content.

Moreover, to prevent that sensitive data displayed on a display screen of a mobile device are revealed to non-secure environments via screen copying techniques (e.g., screenshots, screen recording, screen sharing or similar techniques), modern operating systems provide secure views that can be requested by the client applications running on the mobile device. More precisely, client applications can request that one or more portions of the display screen, on which the client application is displayed, are flagged as secure views towards the operating system. The operating system guarantees that the screen contents of the secure views are not provided to applications that implement any of the abovementioned screen copying techniques.

As outlined above, the abovementioned techniques provide solutions for securing specific sections of data transmission chains and/or for securing data in the context of specific applications, such as rights management for digital media data. Moreover, known techniques are mainly focused on transmitting data to the mobile device, not on interactive settings, wherein parts of the sensitive data are inputted by the user. Therefore, there is a need for a versatile and holistic framework for securing communication with a mobile device.

The object of the present invention is thus to provide a method for secure data communication with a mobile device. In particular, the object is to provide a trustworthy and versatile framework for securing the outputting and/or inputting of data on the mobile device.

The object is achieved by a computer-implemented method for secure data communication with a mobile device according to Claim 1 and a corresponding computer-readable medium according to Claim 11. Moreover, the object is achieved by a computer-implemented method for secure data communication with a mobile device according to Claim 12 and a corresponding computer-readable medium according to Claim 18.

In particular, the object is achieved by a (first) computer-implemented method for secure data communication with a mobile device, the mobile device comprising a hardware-based trusted execution environment (TEE). The method comprises the following steps:
- receiving, from a client application, a request for receiving data on the mobile device;
- establishing a secure communication channel between a protection server and a security software kit on the mobile device, in response to the request;
- receiving, from the protection server, one or more encrypted data parts related to the request; and
- instructing an operating system of the mobile device to decrypt the one or more encrypted data parts via a decryption module of the trusted execution environment, to obtain one or more plain data parts corresponding to the one or more encrypted data parts.

In particular, the abovementioned steps can be executed by the security software kit on the mobile device. The security software kit can be a software application installed on the mobile device.

One aspect of the present invention is to secure the data communication of the client application (e.g., a web browser, a banking app, a password manager, etc.), which needs to receive sensitive data over the internet, by establishing a secure communication channel between a protection server and a security software kit on the mobile device. According to the method described above, the data to be received by the client application is transmitted in an encrypted form via a secure communication channel (or secure tunnel), which starts at the protection server and ends at the TEE of the mobile device. Therefore, both end points of the secure tunnel are arranged in trustworthy environments. In particular, decryption of the data is performed by a decryption module of the TEE, rather than on the rich environment of the mobile device. In other words, the data to be protected stays encrypted until reaching the TEE and cannot be shared with environments outside the TEE unless the security software kit explicitly provides for this.

In summary, the sensitive data are protected
- during transmission to the mobile device by transmitting the sensitive data in encrypted form over the secured communication channel; and
- once the sensitive data is on the mobile device, by decrypting and processing it inside the TEE
to ensure that the sensitive data cannot be exposed to any processing environment not approved by the client application.

In the method described above, the protection server functions as a trustworthy gateway for a web server associated with the client application. Similarly, the security software kit functions as trustworthy intermediary between the client application and the TEE of the mobile device. Therefore, the present invention establishes a universal framework for securing communication between a client application and an associated web server. In particular, the framework of the present invention can be used should the client application not provide securing mechanisms by default or can be used to enhance existing securing mechanisms implemented by the client application.

In one embodiment, the method further comprises instructing the operating system to perform the following steps:
- decoding, by a decoding module of the trusted execution environment, the one or more plain data parts; and
- controlling, by a display controller of the trusted execution environment, the display screen of the mobile device to display the decoded one or more plain data parts.

According to this embodiment, the TEE is further used to display the data securely on a display screen of the mobile device. For this purpose, after decrypting the received encrypted data, the TEE decodes the plain data by using a decoding module of the TEE and controls the display screen to display the decrypted (plain data) and decoded data.

By making use of the TEE's privileged access to the mobile device resources, it can be ensured that the plain data parts are only processed for displaying purposes. This way, the processing environment outside the TEE, including third-party applications, cannot access the plain data parts.

In a (further) embodiment, the method further comprises instructing the operating system to display the one or more plain data parts within one or more secure views of a display screen of the mobile device via the trusted execution environment.

Displaying the plain data parts within one or more secure views has the advantage that the plain data parts are protected against unauthorized access by applications that perform display screen copying, for example by recording the screen content or parts thereof, sharing the screen content to an external device or application, and the like.

That is, displaying the data within secure views can further enhance the protection of the displayed data, over the secure displaying via the TEE as described in the previous embodiment.

In a (further) embodiment, the request of the client application specifies the one or more secure views with respect to at least one of: quantity, screen position, size, and dimensions.

In this case, the security software kit may request the one or more secure views from the operating system in accordance with the specifications of the client application. This way, it is possible to maintain layout requirements regarding the graphical user interface of the client application.

While the previous embodiments describe cases where the sensitive data is finally displayed on a display screen of the mobile device, the sensitive data may also used in another way.

Therefore, in a (further) embodiment, the method comprises instructing the operating system to forward the one or more plain data parts output by the encryption module to the security software kit.

That is, the plain data parts, which are generated by the decryption module of the TEE, do not necessarily be forwarded to an encoding module and display controller of the TEE for displaying, but can also be forwarded to the security software kit for further processing.

In such cases, the security software kit may use the plain data parts to perform any processing operation based thereon. In cases where the processed data is to be displayed, displaying the processed data may be performed similar as described above, in particular using the TEE. Optionally, one or more secure views may be used.

In a (further) embodiment, the method comprises further the following steps:
- establishing, by the protection server, a communication channel with a client application server, based on the request;
- receiving, by the protection server via the communication channel, the one or more plain data pieces.
- encrypting, by the protection server, the one or more plain data parts to generate the one or more encrypted data parts.

The key material used to encrypt the plain data pieces may be a key specific to the TEE, for example, a public key for the TEE within a public-key-infrastructure. In this case, the public key of the TEE may be transmitted from the mobile device to the protection server via the secure communication channel after establishing it.

The above embodiment thus describes a case where the data to be communicated to the mobile device is received by the protection server from a client application server (e.g., a web server of the provider of the client application). After receiving the data from the client application server in plain form, the protection server encrypts the data for the subsequent transmission to the mobile device.

For establishing the communication channel between the protection server and the client application server, the security software kit may transmit connection information to the protection server, wherein the connection information include data specified in the request of the client application. The connection information may include any connection data necessary for connecting with the client application server, credentials, resource identifiers indicating the data to be received by the client application, etc.

The encryption of the plain data parts may be implemented by applying any suitable encryption method, including symmetric encryption algorithms as AES, DES, etc.

While in the above embodiment, the sensitive data are received by the protection server as plain data, it is also possible that the sensitive data are received by the protection server as encrypted data.

Therefore, in a (further) embodiment, the method further comprises the following steps:
- establishing, by the protection server, a communication channel with a client application server, based on the request of the client application;
- receiving, by the protection server via the communication channel, the one or more encrypted data parts.

In particular, when the communication between the protection server and the client application server is through a secure protocol (e.g., HTTPS), the above embodiment provides a further encapsulation of the sensitive data. More precisely, the sensitive data can be subjected to a two-stage encryption, wherein the first encryption (inner encryption) is due to the transmission between client application server and protection server, and the second encryption (outer encryption) is due to the transmission between protection server and mobile device.

Accordingly, two decryption steps are necessary on the mobile device. The first decryption step, corresponding to the second encryption step, is performed within the TEE, in particular as described above. The second decryption step, corresponding to the first encryption step, is performed based on the decrypted data provided by the TEE and can be performed by the software security kit, in particular using secure protocol libraries as OpenSSL. The plain data resulting from the second decryption step can be processed further by any of the methods described herein. In particular, the software security kit may instruct the operating system to display the plain data via one or more secure views.

While in the above example, the encryption of data on the client application server side was described in connection with a secure communication protocol such as HTTPS used between the client application server and the protection server, the sensitive data may also be transmitted in encrypted form via any other communication channel.

In any case, the encryption of data on the client application server side enables a further security layer. In particular, the sensitive data is not revealed to the protection server. For example, it may be desired to further protect vouchers or coupon codes, which are generated by the client application server for the client device and transmitted through the protection server.

The aspects and features regarding the establishing of the communication channel as well as encryption described in connection with the previous embodiments can be applied to the present embodiment as well.

In a (further) embodiment, the method further comprises the following steps:
- requesting, from the trusted execution environment, a device certificate of the mobile device;
- requesting, from the protection server, a key for decrypting the one or more encrypted data parts, using the device certificate;
- receiving the key from the protection server; and
- providing the key to the trusted execution environment (for encrypting the one or more decrypted data parts).

In particular, the steps of requesting the device certificate, receiving the key from the protection server, and providing the received key to the TEE may be implemented by the software security kit on the mobile device.

According to the embodiment described above, the key for encrypting the one or more pieces of encrypted data is received from the protection server after authenticating the mobile device based on a device certificate.

In particular, the key may be transmitted from the protection server to the mobile device using a secure communication channel, preferably the secure communication channel established in response to the request of the client application.

In a (further) embodiment, the method further comprises the following steps:
- requesting, by the protection server from a license server, the key, using the device certificate;
- determining, by the license server, an authentication state of the mobile device, using the device certificate;
- providing, by the license server, the key to the protection server, based on the authentication state.

The above embodiment allows to provide the key for decrypting the data only to authenticated mobile devices, wherein the authentication state is determined by an (external) license server.

Although the license server and the protection server are kept terminologically separate, they can be implemented on the same physical server or on different physical servers.

In a (further) embodiment, the client application is one or more of the following:
- a web browser,
- a Remote Desktop Protocol, RDP, application,
- a Virtual Network Computing, VNC, application,
- a Telnet application; and
- a smartphone app, in particular using a REST interface to request data from the client application server.

Therefore, the method according to the present invention enables to secure communication for a variety of client applications, which may natively implement techniques of different security levels or even no such technique.

The object is further achieved by a computer readable medium comprising instructions for implementing one or more steps of a method as described above, in particular when being executed by at least one processor.

The (first) method of the present invention as described above focusses on settings where sensitive data is to be communicated securely to the mobile device, for example for being displayed on a display screen.

However, the techniques of the present invention can also be utilized in interactive settings, in which sensitive data is inputted by the user. For example, a client application on the mobile device may require the user to input a password via an on-screen keyboard. In this case, the password is sensitive data to be protected. However, such sensitive data may not only be passwords but also data of much less complexity, for example, data indicating a user's choice among multiple options, or even binary data indicating whether the user confirms an action.

Therefore, the object of the present invention is further achieved by a (second) computer-implemented method for secure data communication with a mobile device, the mobile device comprising a hardware-based trusted execution environment. The method comprises the following steps:
- receiving, from a protection server, encrypted data for generating an interaction widget;
- instructing an operating system of the mobile device to generate the interaction widget within a secure view via the trusted execution environment;
- receiving input data, which are detected by at least one input sensor of the mobile device, wherein the input data indicate a user reaction related to the interaction widget;
- sending, to the protection server, an input information, which is determined based on the input data.

In particular, the above steps may be executed by a security software kit installed on the mobile device.

As explained in more detail below, one aspect of the (second) method described above is to leverage the techniques for secure displaying of data on the mobile device to implement a two-stage secure interaction between user and mobile device. In the first stage, an interaction widget is displayed on the mobile device in a secure way, which is achieved by
- receiving the data for generating the interaction widget in an encrypted form;
- decrypting and displaying the interaction widget via a TEE; and
- displaying the interaction widget within a secure view.

In the second stage, the user inputs the data to be protected (e.g., a password, a choice among options, a confirmation, etc.) by interacting in accordance with the interaction widget.

In the context of the present invention, an interaction widget can be understood as any element provided via the mobile device's user interface, wherein the element requests the user to input data to the mobile device in a specific way. For example, an interaction widget may request the user to
a) type in a password or other text data via an on-screen keyboard provided by the interaction widget;
b) point to one of the four corners of the display screen to choose an option; or
c) show a number (e.g. between 1 and 5) using fingers to the camera, to choose a respective option.

The input data, which are indicative of the user's reaction to the interaction widget, may be detected by respective sensors of the mobile device (e.g., touch sensor or image sensor). Input information can be understood as interpretation of the input data. For example, in the above example of an interaction widget that requests the user to show a number using fingers, the input data may be image data acquired by a camera of the mobile device and the input information may be a number between 1 and 5 as returned by an image recognition algorithm applied to the input data.

Preferably, generating the interaction widget is a random process. For this purpose, the protection server may draw one or more random numbers from a probability distribution, store the random number, and include the random number in the data for generating the interaction widget.

The interaction widget is then generated based on the random number(s). For example, in the interaction widget of example a) above, at least some of the key positions of the on-screen keyboard may be randomly permutated according to the one or more random numbers. In the interaction widget of example b), the assignment of display screen corners to options may be determined by the random number(s). In the above example c), the number(s) for choosing the options may be drawn at random.

Using the one or more random numbers for generation of the interaction widget makes the interaction process non-deterministic, in the sense that in different interactions, the same user input may have different interpretations.

Therefore, as long as the content of the interaction widget is transmitted to and displayed on the mobile device securely as described above, the user's response to the interaction widget (i.e., the input data or input information) may be exposed to unsecure environments without risk. In other words, even if the input information (e.g., the number shown by the user) is exposed to untrustworthy applications, this information is not meaningful, since the interpretation of the input information is determined by the content of the interaction widget, which is protected against the untrustworthy applications.

As a consequence, other than the data for generating the interaction widget, the input information does not necessarily need to be communicated over a secured communication channel.

Therefore, in one embodiment,
- the encrypted data for generating the interaction widget are received from the protection server via a secured (downlink) communication channel; and
- the input information is sent to the protection server via an unsecured (uplink) communication channel.

By using an unsecured communication channel for sending the input information, the efficiency and resource requirements of the method can be improved. In particular, several steps that are necessary for establishing a secure communication channel are not required, for example, SSL/TLS handshake, key exchange, and encryption.

For acquiring the input data from the user, and the subsequent determining of the input information based on the input data, several variants are conceivable.

In one embodiment, the input sensor is an image sensor (camera) of the mobile device, and the input information is obtained from the input data by gesture recognition and/or facial expression recognition.

In a (further) embodiment, the input sensor is a microphone of the mobile device, and the input information is obtained from the input data by voice recognition.

In a (further) embodiment, the input sensor is a haptic sensor of the mobile device, and the input information is obtained from the input data by determining a display screen position detected by the haptic sensor.

It is also possible to combine one or more of the aforementioned embodiments. For example, the input data may be a combination of image data and voice data, which are acquired from a camera and a microphone of the mobile device, respectively.

In a (further) embodiment, the method further comprises one or more of the following steps:
- receiving, by the security software kit, an interaction request from a client application;
- requesting, from the protection server, data for generating an interaction widget for implementing the interaction request;
- receiving, from the protection server, an evaluation result; and
- providing, to the client application, an evaluation result.

In particular, the above steps can be executed by a security software kit implemented on the mobile device. In this case, the security software kit can be considered an intermediary between the client application and the protection server.

The interaction request from the client application may specify the type of input data (e.g., an alphanumeric password, a secret number, a single or multiple choice among a set of options, etc.) and the input type (on-screen keyboard, gesture recognition, voice recognition, etc.).

The software security kit may forward this data to the protection server. In response to this, the protection server transmits data for generating an interaction widget in accordance with the requirements specified in the interaction request.

After the input information has been sent to the protection server as described above, the protection server may send an evaluation result to the mobile device. In particular, the protection server may determine the evaluation result by evaluating the input information based on the (random) data for generating the interaction widget. For determining the evaluation result, the protection server may also communicate with a further server, for example, an authentication server providing user credentials.

The software security kit may provide the evaluation result received from the protection server to the client application.

The object is further achieved by a computer readable medium comprising instructions for implementing one or more steps of a (second) method as described above, in particular when being executed by at least one processor.

It is explicitly pointed out that the embodiments and aspects described in connection with the first method of the present invention can be applied to or combined with the embodiments and aspects of the second method of the present invention, and vice versa. In addition, any one of the embodiments described above may be combined with any one or more of the other embodiments. Moreover, the aspects and embodiments described of the methods shall be disclosed as functions of the devices of the present invention, and vice versa.

In the following, embodiments of the invention are described with respect to the figures, wherein
- Fig. 1: shows a system for implementing a method for secure data communication;
- Figs. 2a and 2b: shows a software security kit implemented on a mobile device;
- Fig. 3: shows the data flow in a method for secure data communication;
- Fig. 4: shows a graphical user interface of a client application with sensitive data displayed within secure views;
- Fig. 5: shows the data flow in a second method for secure data communication with user interaction; and
- Fig. 6: shows an interaction widget for the method discussed in Figure 5.

In the following description, same reference signs are used for same parts and parts with the same effect.

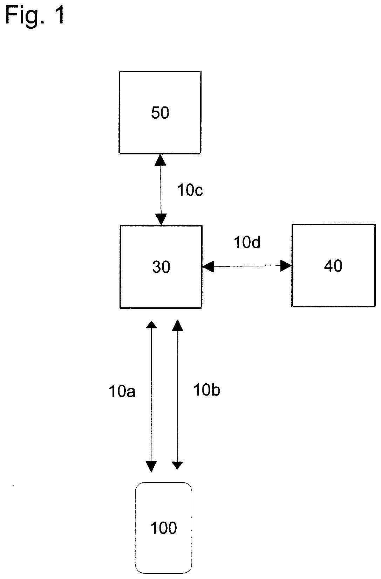

Figure 1 illustrates an embodiment of a system for implementing a method according to the present invention. The system comprises a mobile device 100, a protection server 30, an optional client application server 50 and an optional license server 40.

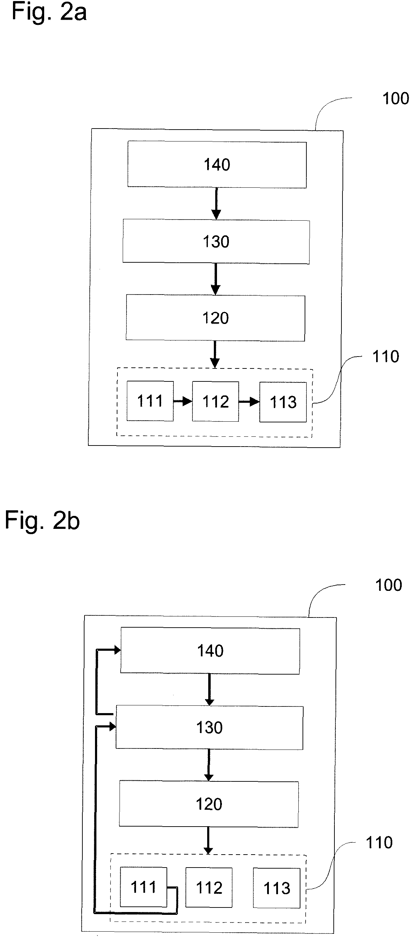

On the mobile device 100, a security software kit 140 is installed as a software application, which is configured to perform the steps of the first and/or second method according to the present invention. Further details of the security software kit 140 are discussed below in connection with Figures 2a and 2b.

The mobile device 100 is connected to the protection server 30 via a secure communication channel 10a, in particular using the HTTPS/TLS protocol. Optionally, the mobile device 100 and the protection server 30 are connected via the second communication channel 10b.

The protection server 30 is connected with the client application server 50 via a communication channel 10c. Moreover, the protection server 30 is connected with the license server 40 via the communication channel 10d.

Figures 2a and 2b illustrate a software security kit 140 implemented on a mobile device.

In the embodiment shown in Figure 2a, the mobile device 100 includes the following software components: the client application 140, the security software kit 130, and the operating system 120 of the mobile device 100. Moreover, the mobile device 100 comprises a hardware-based TEE 110, which includes a decryption module 111, a decoding module 112 and a display 113.

The client application 100 may be any smartphone app that processes sensitive data to be protected, for example, a financial app, a health app, a password manager, or the like.

As can be seen from the high-level illustration of Figure 2a, the security software kit provides 130 a (trustworthy) interface between the client application 140 and the operating system 120 for securing the data communication to and within the client application 140 using the TEE 110.

In particular, in the embodiment shown in Figure 2a, the security software kit 140 is configured such that sensitive data, which is to be displayed within the client application 140, is
- received as encrypted data on the mobile device 100;
- decrypted by the decryption module 111 of the TEE 110;
- encoded for displaying by the encoding module 112 of the TEE 110;
- and displayed by the display controller 113 of the TEE.

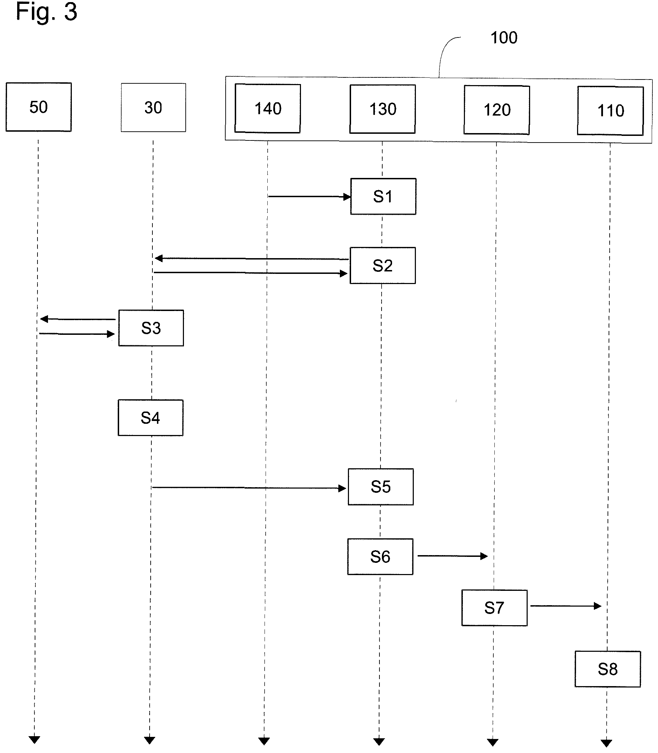

The process is described in further detail based on Figure 3.

In the embodiment shown in Figure 2a, the decrypted data is solely processed within the TEE 110 and not shared with components of the mobile device 100 that are not controlled by the TEE.

Figure 2b illustrates a similar configuration, where the sensitive data is received in an encrypted form as described above. However, after being decrypted by the decryption module 111, the plain data is forwarded to the security software kit 130, which forwards the plain data to the client application. Such a configuration addresses use cases where the sensitive data is to be transmitted to the mobile device 100 securely but does have to be displayed securely on the mobile device 100.

Figure 3 shows the data flow in a method for secure data communication for a first setting, where sensitive data to be displayed in a client application 140 is protected, without user interaction.

The entities shown in Figure 3 are a client application server 50, a protection server 30 and a mobile device 100. The mobile device 100 includes a client application 140, a software security kit 130, an operating system 120 and a hardware-based TEE 110. In particular, the aforementioned entities may have the functions described in connection with Figures 1 and 2.

In step S1, the software security kit 130 receives a request from the client application 140 for securely displaying sensitive data on the mobile device 100, wherein the sensitive data are to be received from the client application server 50. For this purpose, the request includes all necessary data such that, in a later step, the protection server 30 can fetch the sensitive data from the client application server 50.

For example, the client application 140 may be a banking app and the sensitive data to be displayed may be one or more account balances of the user.

In step S2, the software security kit 130 establishes a secure communication channel, in particular according to an HTTPS/TLS protocol, between the software security kit 130 and the protection server 30. This step may include steps like SSL/TLS handshake, key exchange, and encryption.

After the secure communication channel is established in step S2, the software security kit 130 instructs the protection server 30 to fetch the sensitive data from the client application server 50. For this purpose, some or all data from the request of the client application 140 may be forwarded to the protection server 30.

In step S3, the protection server 30 fetches the sensitive data from the client application server 50. For this purpose, step S3 may include establishing a secure communication channel between the protection server 30 and the client application server 50.

In step S4, the protection server 50 encrypts the sensitive data obtained from the protection server 30 and thus generates one or more pieces of encrypted data. For encrypting the sensitive data, the protection server 50 uses key material that is specific to the TEE 110 of the mobile device. In particular, the software security kit 130 may include a respective public key in its request to the protection server 30 in step S2.

The encrypted sensitive data is then transmitted, via the secure communication channel, from the protection server 30 to the software security kit 130 on the mobile device 100. In step S5, the software security kit 130 receives the one or more encrypted data parts indicating the sensitive data.

In step S6, the software security kit 130 instructs the operating system 120 to forward the one or more encrypted data parts to the TEE 110 for secure displaying in one or more secure views, in accordance with the request of the client application 130 received in step S1.

In step S7, the operating system 120 instructs the TEE 110 to decrypt the one or more encrypted data parts and to display the corresponding one or more plain data parts in accordance with the request of the client application 130 received in step S1.

In step S8, the TEE 110 decrypts the one or more encrypted data parts using hardware-based decryption module 111 and the respective private key of the TEE 100, and thus generates one or more corresponding parts of plain data. Moreover, the TEE 100 decodes the plain data parts for being displayed, and controls, via a display controller 113 of the TEE 100, a display of the mobile device 100 to display the plain data parts.

It should be noted that after encryption by the protection server (step S4) and before the decryption by the decryption module 110 of the TEE 100 (step S8), the sensitive data is not available in plain form. Moreover, through the restricted processing within the TEE 100 in step S8, the plain data does not leave the TEE 100. Therefore, the sensitive data (in plain form) is not exposed to the rich environment of the mobile device 100. Moreover, the displaying in one or more secure views protects the sensitive data from being copied by screen copying techniques.

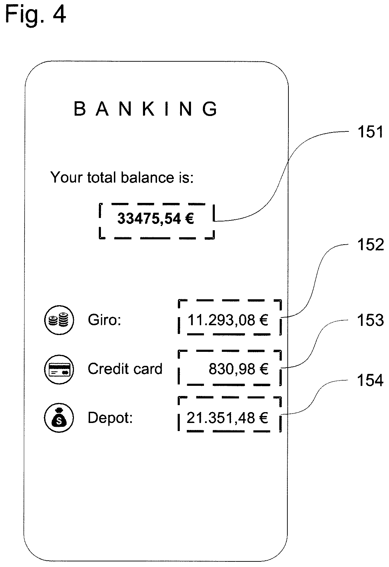

Figure 4 illustrates a graphical user interface of a banking application as client application, which includes account balances displayed within respective secure views 151-14.

The total number and respective configurations (including position, dimension, etc.) of the secure views may be specified in the initial request of the client application to the software security framework (see step S1 in Figure 3).

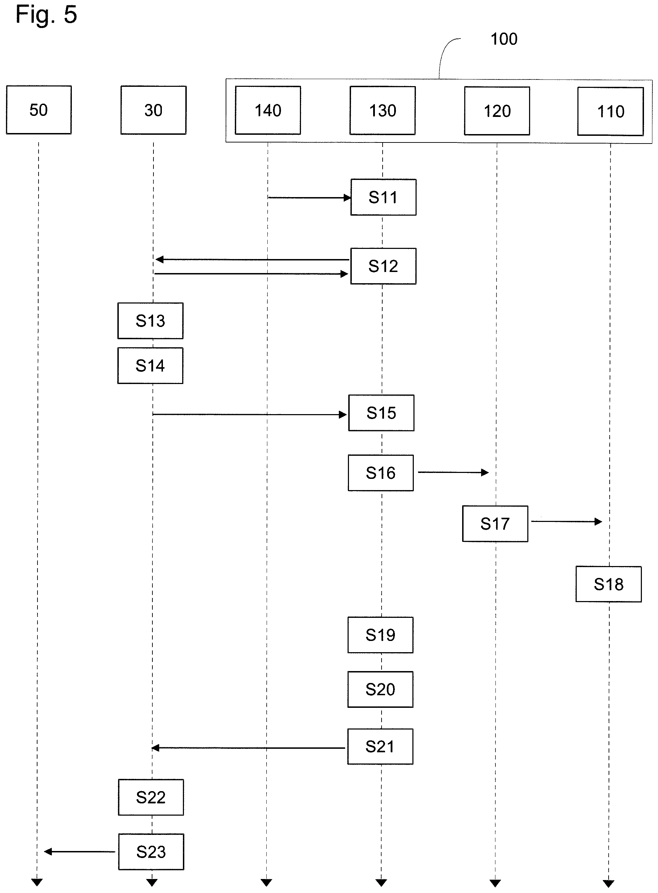

Figure 5 shows the data flow in a second method for secure data communication with user interaction. As in the embodiment of Figure 3, the entities implementing the illustrated method include a client application server 50, a protection server 30 and a mobile device 100. The mobile device 100 includes a client application 140, a software security kit 130, an operating system 120 and a hardware-based TEE 110. In particular, the aforementioned entities may have the functions described in connection with Figures 1 and 2.

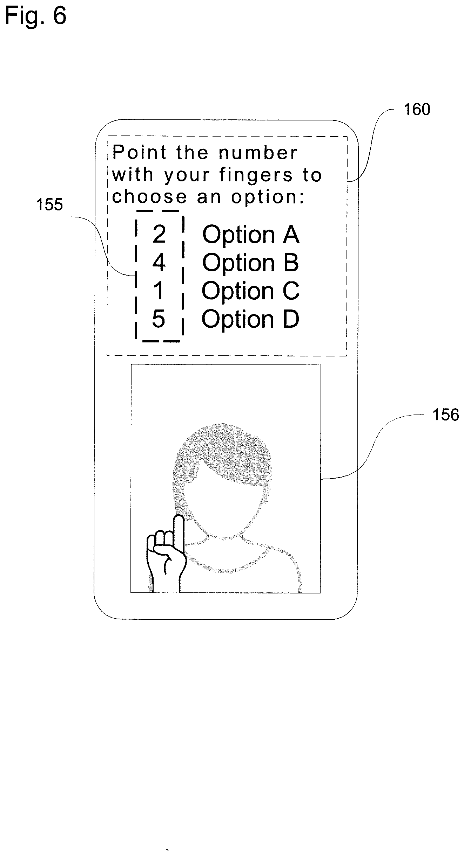

While in the embodiment of Figure 3, the sensitive data come originally from the client application server 50, in the present embodiment, the sensitive data are inputted by the user to the mobile device 100. In the illustrated example, the sensitive data are a user's choice among options A, B, C and D (see Figure 6).

In step S11, the software security kit 130 receives an interaction request from a client application 140, wherein the interaction request specifies that the process of the user choosing an option among A, B, C, and D is to be protected, and that the input method is pointing with fingers.

In step S12, the software security kit 130 establishes a secure communication channel with the protection server 30 (in particular as described in step S12 of Figure 3) and transmits some or all information from the interaction request to the protection server 30 via the established communication channel.

In step S13, the protection server 30 generates data for generating an interaction widget in accordance with the information from the interaction request (e.g., the number of options). For this purpose, the protection server 30 samples four distinct random numbers from a probability distribution with domain {1, 2, 3, 4, 5} and assigns the random numbers to the four options, for example:

| | | | |
|---|---|---|---|
| A=2 | B=4 | C=1 | D=5. |

The above mapping between options and random numbers is part of the data for generating the interaction widget and stored on the protection server.

In step S14, the data for generating the interaction widget get encrypted using key material specific for the TEE (see explanations of step S14 in Figure 3).

Subsequently, the encrypted data for generating the interaction widget are transmitted to the software security kit 140 via the secure communication channel established in step S12.

In step S15, the (encrypted) data for generating the interaction widget are received by the software security kit 140.

In step S16, the operating system 120 is instructed to generate the interaction widget via the TEE 110, using the data received in step S15 and in accordance with the interaction request received in step S11. For example, the interaction request may specify a position within the graphical user interface of the client application 140 where the interaction widget is to be displayed. Steps S17-S18 involve essentially identical or similar steps as steps S7-S8 in Figure 3.

As an intermediate result, after step S18, an interaction widget 160 is displayed within the graphical user interface of the client application 140. The interaction widget requests the user to choose among options A, B, C, and D by pointing the respective number (i.e., the random number as determined by the protection server 30) to a camera of the mobile device 100.

For illustrative purposes, see Figure 6. Here, the interaction widget 160 is shown in the top part of the display screen and includes the following text:
"Point the number with your fingers to choose an option:

| | |
|---|---|
| 2 | Option A |
| 4 | Option B |
| 1 | Option C |
| 5 | Option D" |

In the bottom part of the display screen, a window 156 is displayed, which shows the current image detected by a front camera of the mobile device. In the shown example, the user points the number "1" for choosing option C.

It should be noted that, similarly to Figure 3, after encryption by the protection server (step S14) and before the decryption by the decryption module 110 of the TEE 100 (step S18), the data for generating the interaction widget are not available in plain form. Moreover, through the restricted processing within the TEE 100 in step S18, the plain data does not leave the TEE 100. Therefore, the data for generating the interaction widget, including the mapping between options and random numbers, is not exposed to the rich environment of the mobile device 100 (in plain form). Without this information, the user input (pointing the number "1") is not meaningful and thus protected.

Moreover, the displaying of the random numbers in the secure view 155 protects the sensitive data from being copied by screen copying techniques.

Back to Figure 5, steps S19-S22 describe the receiving and further processing of the user input.

In step S19, as described based on Figure 6 above, the image data detected by the front camera of the mobile device 100 are received.

In step S20, the input data are processed by an image detection algorithm. As a result, the input information "1" is generated, since the user pointed "1" with his fingers on the picture defined by the input data.

In step S21, the input information is transmitted to the protection server 30. It should be noted that this transmission does not necessarily be done via a secured communication channel, since the transmitted information (the input information "1") is only meaningful together with the mapping between random numbers and options. However, the mapping is securely stored on the protection server 30 and has been securely transmitted to and protected within the mobile device 100 as described above.

That is, when implementing the method using the system shown in Figure 1, the input information may be transmitted from the mobile device to the protection server via the (unsecure) communication channel 10b, while the data for generating the interaction widget is transmitted in step S15 via the secure communication channel 10a.

In step S22, the protection server 30 evaluates the input information received from the software security kit 130. In particular, the evaluation may include resolving the input information "1" to "Option C" using the previously generated and stored mapping of random numbers to options.

In an optional step S23, the protection server 30 may communicate that the user's choice (Option C) to the client application server 50, preferably via a secure communication channel. However, the protection server 30 may also use the obtained information in a way different from transmitting it to the client application server 50.

It will be understood that, while various aspects of the present disclosure have been illustrated and described by way of example, the invention described herein is not limited thereto, but may be otherwise variously embodied as suggested by the disclosure.

In particular, in the example of Figure 5, the input method (pointing by fingers) has been determined by the client application 140, and forwarded to the protection server 30 by the software security kit. However, it is also possible that the software security kit 130 or the protection server 50 may determine the input method.

Moreover, in the example of Figure 5, the interpretation of input data (that is, the generating of input information) is performed by the mobile device (step S20), such that the input information can be sent to the protection server rather than the input data (step S21). This is preferable for efficiency reasons, since the input information can be considered as a more compact representation of the input data. However, alternatively, it is also possible to send the input data to the protection server 30 and to generate the input information on the server side.

At this point, it should be pointed out that all parts described above are to be regarded as independent embodiments or further developments of the invention, in each case on their own and in combination or any sub-combination, even without the features additionally described in the respective context, even if these have not been explicitly identified individually as optional features in the respective context, for example by using: "in particular", "preferably", "for example", "e.g.", "possibly" , round brackets, etc. Deviations therefrom are possible. Specifically, it should be noted that the word "in particular" or round brackets do not indicate features that are mandatory in the respective context.

### List of reference numerals

- 10a-d: communication channel

- 30: protection server
- 40: license server
- 50: client application server

- 100: mobile device
- 110: trusted execution environment
- 111: decryption module
- 112: decoding module
- 113: display
- 120: operating system
- 130: security software kit
- 140: client application

- S1: receiving request from client application
- S2: establishing secure communication channel
- S3: fetching data from client application server
- S4: encrypting data
- S5: receiving encrypted data
- S6: instructing the operating system
- S7: instructing the TEE
- S8: decrypting, decoding and displaying by TEE

- S11: receiving interaction request from client application
- S12: establishing secure communication channel
- S13: generating data for generating interaction widget
- S14: encrypting data
- S15: receiving encrypted data
- S16: instructing the operating system
- S17: instructing the TEE
- S18: decrypting, decoding and displaying by TEE
- S19: receiving input data
- S20: generating input information
- S21: transmitting input information to the protection server
- S22: evaluating input information
- S23: transmitting user choice to client application server

## Claims

1. Computer-implemented method for secure data communication with a mobile device (100),
the mobile device (100) comprising a hardware-based trusted execution environment (110),
the method comprising the following steps:
- receiving, from a client application (140), a request for receiving data on the mobile device (100);
- establishing a secure communication channel (10a) between a protection server (30) and a security software kit (130) on the mobile device (100), in response to the request;
- receiving, from the protection server (30), one or more encrypted data parts related to the request; and
- instructing an operating system (120) of the mobile device (100) to decrypt the one or more encrypted data parts via a decryption module (111) of the trusted execution environment (110), to obtain one or more plain data parts corresponding to the one or more encrypted data parts.

2. Method according to Claim 1,
further comprising instructing the operating system (120) to perform the following steps:
- decoding, by a decoding module (112) of the trusted execution environment (110), the one or more plain data parts; and
- controlling, by a display controller (113) of the trusted execution environment (110), the display screen of the mobile device (100) to display the decoded one or more plain data parts.

3. Method according to Claim 1 or 2,
in particular according to Claim 2,
further comprising instructing the operating system (120) to display the one or more plain data parts within one or more secure views (150-154) of a display screen of the mobile device (100) via the trusted execution environment (110).

4. Method according to any one of the preceding claims,
in particular according to Claim 3,
wherein the request of the client application (140) specifies the one or more secure views (151-154) with respect to at least one of: quantity, screen position, size, and dimensions.

5. Method according to any one of the preceding claims,
further comprising:
- instructing the operating system (120) to forward the one or more plain data parts output by the encryption module (111) to the security software kit (130).

6. Method according to any one of the preceding claims,
further comprising:
- establishing, by the protection server (30), a communication channel (10c) with a client application server (50), based on the request;
- receiving, by the protection server (30) via the communication channel (10c), the one or more plain data pieces.
- encrypting, by the protection server (30), the one or more plain data parts to generate the one or more encrypted data parts.

7. Method according to any one of the preceding claims,
further comprising:
- establishing, by the protection server (30), a communication channel (10c) with a client application server (50), based on the request of the client application (140);
- receiving, by the protection server (30) via the communication channel (10c), the one or more encrypted data parts.

8. Method according to any one of the preceding claims,
further comprising the following steps:
- requesting, from the trusted execution environment (110), a device certificate of the mobile device (100);
- requesting, from the protection server (30), a key for decrypting the one or more encrypted data parts, using the device certificate;
- receiving the key from the protection server (30); and
- providing the key to the trusted execution environment (110).

9. Method according to any one of the preceding claims,
in particular according to Claim 8,
further comprising the following steps:
- requesting, by the protection server (30) from a license server (40), the key, using the device certificate;
- determining, by the license server (40), an authentication state of the mobile device (100), using the device certificate;
- providing, by the license server (40), the key to the protection server (30), based on the authentication state.

10. Method according to any one of the preceding claims,
wherein the client application (140) is one or more of the following:
- a web browser,
- a Remote Desktop Protocol, RDP, application,
- a Virtual Network Computing, VNC, application,
- a Telnet application; and
- a smartphone app, in particular using a REST interface.

11. Computer-readable medium comprising instructions for implementing one or more steps of a method according to any one of the preceding claims, in particular when being executed by at least one processor.

12. Computer-implemented method for secure data communication with a mobile device (100),
the mobile device (100) comprising a hardware-based trusted execution environment (110),
the method comprising the following steps:
- receiving, from a protection server (30), encrypted data for generating an interaction widget (160);
- instructing an operating system (120) of the mobile device (100) to generate the interaction widget (160) within a secure view (155) via the trusted execution environment (110);
- receiving input data, which are detected by at least one input sensor of the mobile device (10), wherein the input data indicate a user reaction related to the interaction widget (160); and
- sending, to the protection server (30), an input information, which is determined based on the input data.

13. Method according any one of the preceding claims,
in particular according to Claim 12,
wherein the encrypted data for generating the interaction widget (160) are received from the protection server (30) via a secured communication channel (10a) and
wherein the input information is sent to the protection server (30) via an unsecured communication channel (10b).

14. Method according to any one of the preceding claims,
in particular according to Claim 12 or 13,
wherein the input sensor is an image sensor of the mobile device (100), and the input information is obtained from the input data by gesture recognition and/or facial expression recognition.

15. Method according to any one of the preceding claims,
in particular according to any one of Claims 12 to 14,
wherein the input sensor is a microphone of the mobile device (100), and the input information is obtained from the input data by voice recognition.

16. Method according to any one of the preceding claims,
in particular according to any one of Claims 12 to 15,
wherein the input sensor is a haptic sensor of the mobile device (100), and the input information is obtained from the input data by determining a display screen position detected by the haptic sensor.

17. Method according to any one of the preceding claims,
in particular according to any one of Claims 12 to 16,
comprising at least one of the following steps:
- receiving, by the security software kit (130), an interaction request from a client application (140);
- requesting, from the protection server (30), data for generating an interaction widget for implementing the interaction request;
- receiving, from the protection server (30), an evaluation result; and
- providing, to the client application (140), an evaluation result.

18. Computer-readable medium comprising instructions for implementing one or more steps of a method according to any one of Claims 12 to 17, in particular when being executed by at least one processor.
